# EUROPÄISCHE PATENTSCHRIFT

(11) **EP 1 336 615 B1**
(45) Veröffentlichungstag und Bekanntmachung des Hinweises auf die Patenterteilung: **02.08.2006**
(21) Anmeldenummer: 03001927.7
(22) Anmeldetag: 30.01.2003
(51) Int. Cl.: C07F 15/04, C07F 15/00, C08F 10/00

(54) **Metallkomplexe von Iminohydroxamsäuren**
Metal complexes with iminohyrdoxamic acid as a ligand
Complexes métalliques à base d'acide iminohydroxamique

(30) Priorität: 13.02.2002 DE 10206113
(43) Veröffentlichungstag der Anmeldung: 20.08.2003
(73) Patentinhaber: Basell Polyolefine GmbH, 50389 Wesseling (DE)
(72) Erfinder: Kristen, Marc Oliver, Dr., 67117 Limburgerhof (DE); Preishuber-Flügel, Peter, Dr., 67061 Ludwigshafen (DE); Bildstein, Benno, Prof.Dr., 6020 Innsbruck (AT); Krajete, Alexander, 5020 Salzburg (AT)

(56) Entgegenhaltungen:
- WO-A-98/40420
- US-B1- 6 200 925
- KHARSAN, R.N.S.; MISHRA, R.K.: "Gravimetric Determination and Separation of Copper from Nickel with N-Hydroxy-N-p-chlorophenyl-N'-(2-methyl-4- chlorophenyl)-benzamidine Hydrochloride" MIKROCHIMICA ACTA, 1983, Seiten 37-41, XP009019612

## Beschreibung

Die vorliegende Erfindung betrifft Komplexverbindungen der allgemeinen Formel I a bis I b, 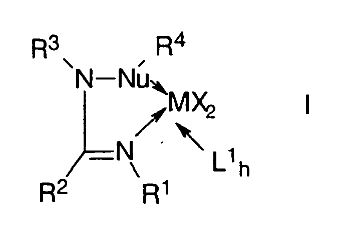 bei denen die Variablen wie folgt definiert sind:
- Nu: ausgewählt aus O, S, N-R⁴*, P-R⁴*,
- M: ausgewählt aus Ni, Pd;
- h: ist eine ganze Zahl von 0 bis 4;
- X: gleich oder verschieden und ausgewählt aus Halogen, C₁-C₈-Alkyl, C₃-C₁₂-Cycloalkyl, C₇-C₁₃-Aralkyl oder C₆-C₁₄-Aryl,
- R¹, R⁴, R⁴*: gleich oder verschieden und ausgewählt aus Wasserstoff,
C₁-C₁₈-Alkyl, substituiert oder unsubstituiert,
einfach gebundenem C₂-C₁₈-Alkenyl, substituiert oder unsubstituiert, mit ein bis 4 isolierten oder konjugierten Doppelbindungen;
C₃-C₁₂-Cycloalkyl, substituiert oder unsubstituiert,
C₇-C₁₃-Aralkyl,
C₆-C₁₄-Aryl, unsubstituiert oder einfach oder mehrfach gleich oder verschieden substituiert mit
C₁-C₁₈-Alkyl, substituiert oder unsubstituiert,
C₂-C₁₈-Alkenyl, substituiert oder unsubstituiert,
C₃-C₁₂-Cycloalkyl,
C₇-C₁₃-Aralkyl,
C₆-C₁₄-Aryl,
Halogen,
C₁-C₆-Alkoxy, substituiert oder unsubstituiert,
C₆-C₁₄-Aryloxy,
SiR⁵R⁶R⁷ oder O-SiR⁵R⁶R⁷;
einfach gebundenen fünf- bis sechsgliedrigen stickstoffhaltigen Heteroarylresten, unsubstituiert oder einfach oder mehrfach gleich oder verschieden substituiert mit
C₁-C₁₈-Alkyl, substituiert oder unsubstituiert,
C₂-C₁₈-Alkenyl, substituiert oder unsubstituiert,
C₃-C₁₂-Cycloalkyl,
C₇-C₁₃-Aralkyl,
C₆-C₁₄-Aryl,
Halogen,
C₁-C₆-Alkoxy,
C₆-C₁₄-Aryloxy,
Si R⁵R⁶R⁷ oder O-SiR⁵R⁶R⁷;
- R²: C₆-C₁₄-Aryl, unsubstituiert oder einfach oder mehrfach gleich oder verschieden substituiert, oder fünf- bis sechsgliedrigen stickstoffhaltigen Heteroarylresten, unsubstituiert oder einfach oder mehrfach gleich oder verschieden substituiert, wobei die Substituenten wie oben stehend definiert sind;
- R³: C₁-C₁₈-Alkyl, C₂-C₁₈-Alkenyl, substituiert oder unsubstituiert, mit ein bis 4 isolierten oder konjugierten Doppelbindungen, C₃-C₁₂-Cycloalkyl, substituiert oder unsubstituiert, C₇-C₁₃-Aralkyl, C₆-C₁₄-Aryl, unsubstituiert oder einfach oder mehrfach gleich oder verschieden substituiert, oder fünf- bis sechsgliedrigen stickstoffhaltigen Heteroarylresten, unsubstituiert oder einfach oder mehrfach gleich oder verschieden substituiert, wobei die Substituenten wie oben stehend definiert sind;
wobei räumlich benachbarte Reste R¹ bis R⁴ miteinander zu einem 5- bis 12-gliedrigen Ring verbunden sein können, der seinerseits Substituenten tragen kann, die ausgewählt sind aus C₁-C₈-Alkyl, substituiert oder unsubstituiert, C₂-C₈-Alkenyl, substituiert oder unsubstituiert, mit ein bis 4 isolierten oder konjugierten Doppelbindungen, C₃-C₁₂-Cycloalkyl, substituiert oder unsubstituiert, C₇-C₁₃-Aralkyl oder C₆-C₁₄-Aryl;
- L¹: ein organischer oder anorganischer Neutralligand,
- R⁵ bis R⁷: gleich oder verschieden und ausgewählt werden aus Wasserstoff, C₁-C₈-Alkyl, C₃-C₁₂-Cycloalkyl, C₇-C₁₃-Aralkyl oder C₆-C₁₄-Aryl.

Weiterhin betrifft die vorliegende Erfindung ein Verfahren zur Polymerisation von Olefinen unter Verwendung von Komplexverbindungen der allgemeinen Formel I.

Polymere und Copolymere von Olefinen sind wirtschaftlich von großer Bedeutung, weil die Monomere in großen Mengen leicht zugänglich sind und weil sich die Polymere durch Variation des Herstellverfahrens oder der Verarbeitungsparameter in weiten Bereichen variieren lassen. Besondere Aufmerksamkeit beim Herstellverfahren gilt dabei dem verwendeten Katalysator. Neben Ziegler-Natta-Katalysatoren sind verschiedenartige Single-Site-Katalysatoren von wachsender Bedeutung, wobei als Zentralatome neben Zr wie beispielsweise in Metallocenkatalysatoren (H.-H. Brintzinger *et al., Angew. Chem.* **1995,** *107,* 1255) auch Ni oder Pd (WO 96/23010) oder Fe und Co (z.B. WO 98/27124) genauer untersucht worden sind. Die Komplexe von Ni, Pd, Fe und Co werden auch als Komplexe Später Übergangsmetalle bezeichnet.

Metallocenkatalysatoren haben für den großtechnischen Einsatz Nachteile. Die am häufigsten verwendeten Metallocene, das sind Zirkonocene und Hafnocene, sind hydrolyseempfindlich. Außerdem sind die meisten Metallocene empfindlich gegenüber einer Vielzahl von Katalysatorgiften wie beispielsweise Alkoholen, Ethern oder CO, was eine sorgfältige Reinigung der Monomeren bedingt.

Während Ni- oder Pd-Komplexe (WO 96/23010) die Bildung hochverzweigter, kommerziell wenig interessanter Polymere katalysieren, führt die Verwendung von Fe- oder Co-Komplexen zur Bildung von hochlinearem Polyethylen mit sehr geringen Anteilen an Comonomer.

In EP-A 0 874 005 werden weitere polymerisationsaktive Komplexe offengelegt. Es handelt sich bei den Komplexen bevorzugt um Ti-Komplexe mit Salicylaldiminliganden. Auch sie tragen Phenylsubstituenten oder substituierte Phenylsubstituenten am Aldimin-Stickstoffatom (Seite 18-23), oder aber das Aldimin-Stickstoffatom ist in einen 6-gliedrigen Ring eingebaut (Seite 31-32). Sie erzeugen aber in der Regel niedermolekulare Polyethylene, die als Werkstoffe wenig geeignet sind. Weiterhin ist den in EP-A 0 874 005 offengelegten Liganden gemeinsam, dass das Sauerstoffatom ein Bestandteil phenolischer Systeme ist, was die Auswahl an leicht zugänglichen Ausgangsmaterialien einschränkt.

In der Anmeldung US 2001/0025007 werden Verbindungen der allgemeinen Formeln A und B 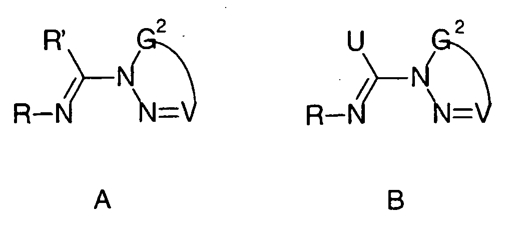 offenbart und ihre Verwendung als Katalysator zur Polymerisation von Olefinen, wobei G², R und R' Kohlenwasserstoffreste sind, U eine Gruppe wie beispielsweise Alkoxy und V aus CR, N oder PR₂ gewählt wird. Die Synthese derartiger Komplexe A und B ist jedoch ziemlich aufwändig. Auch lassen sich die verfahrenstechnischen Parameter der Komplexe A und B noch verbessern.

Wie G.J.P. Britovsek *et al.* in *Angew. Chem.* **1999,** *111,* 448 und *Angew. Chem. Int. Ed. Engl.* **1999,** *38,* 428 zeigen, ist aufgrund der großen kommerziellen Bedeutung von Polyolefinen die Suche nach möglichst vielseitigen polymerisationsaktiven Komplexen auch weiterhin von Bedeutung. Dabei ist von Interesse, solche polymerisationsaktiven Komplexe zu finden, die ein verfahrenstechnisch besonders günstiges Eigenschaftsprofil aufweisen.

Daher bestand die Aufgabe,
- neue Komplexverbindungen bereitzustellen, die zur Polymerisation von Olefinen zu hochmolekularen Polymeren geeignet sind;
- ein Verfahren zur Herstellung der erfindungsgemäßen Komplexverbindungen bereitzustellen;
- ein Verfahren zur Polymerisation oder Copolymerisation von Olefinen unter Verwendung der erfindungsgemäßen Komplexverbindungen bereitzustellen;
- Trägerkatalysatoren für die Polymerisation von Olefinen sowie ein Verfahren zur Herstellung der erfindungsgemäßen Trägerkatalysatoren unter Verwendung der erfindungsgemäßen Komplexverbindungen bereitzustellen;
- mit den erfindungsgemäßen Trägerkatalysatoren Olefine zu polymerisieren und zu copolymerisieren.

Überraschend wurde nun gefunden, dass die Aufgabe mit Hilfe Komplexverbindungen gelöst werden kann, die die eingangs definierten Strukturen der allgemeinen Formel I aufweisen.

In Formel I sind die Variablen wie folgt definiert:
- Nu: ausgewählt aus O, S oder N-R⁴* oder P-R⁴*, wobei Sauerstoff und N-R⁴* bevorzugt sind;
- M: ausgewählt aus Ni oder Pd in der Wertigkeit von +2, bevorzugt ist Ni;
- h: ist eine ganze Zahl von 0 bis 4; bevorzugt gleich 0;
- X: gleich oder verschieden und ausgewählt aus
- Halogen, wie Fluor, Chlor, Brom oder Iod, bevorzugt sind Chlor oder Brom und besonders bevorzugt ist Chlor;
- C₁-C₈-Alkyl, wie Methyl, Ethyl, n-Propyl, iso-Propyl, n-Butyl, iso-Butyl, sec.-Butyl, tert.-Butyl, n-Pentyl, iso-Pentyl, sec.-Pentyl, neo-Pentyl, 1,2-Dimethylpropyl, iso-Amyl, n-Hexyl, iso-Hexyl, sec.-Hexyl, n-Heptyl, iso-Heptyl und n-Octyl; bevorzugt C₁-C₆-Alkyl wie Methyl, Ethyl, n-Propyl, iso-Propyl, n-Butyl, iso-Butyl, sec.-Butyl, tert.-Butyl, n-Pentyl, iso-Pentyl, sec.-Pentyl, neo-Pentyl, 1,2-Dimethylpropyl, iso-Amyl, n-Hexyl, iso-Hexyl, sec.-Hexyl, besonders bevorzugt C₁-C₄-Alkyl wie Methyl, Ethyl, n-Propyl, iso-Propyl, n-Butyl, iso-Butyl, sec.-Butyl und tert.-Butyl;
- C₃-C₁₂-Cycloalkyl, wie Cyclopropyl, Cyclobutyl, Cyclopentyl, Cyclohexyl, Cycloheptyl, Cyclooctyl, Cyclononyl, Cyclodecyl, Cycloundecyl und Cyclododecyl; bevorzugt sind Cyclopentyl, Cyclohexyl und Cycloheptyl;
- C₇-C₁₃-Aralkyl bevorzugt C₇- bis C₁₂-Phenylalkyl wie Benzyl, 1-Phenethyl, 2-Phenethyl, 1-Phenyl-propyl, 2-Phenyl-propyl, 3-Phenyl-propyl, Neophyl (l-Methyl-l-phenylethyl), 1-Phenyl-butyl, 2-Phenyl-butyl, 3-Phenyl-butyl und 4-Phenyl-butyl, besonders bevorzugt Benzyl; oder
- C₆-C₁₄-Aryl, beispielsweise Phenyl, 1-Naphthyl, 2-Naphthyl, 1-Anthryl, 2-Anthryl, 9-Anthryl, 1-Phenanthryl, 2-Phenanthryl, 3-Phenanthryl, 4-Phenanthryl und 9-Phenanthryl, bevorzugt Phenyl, 1-Naphthyl und 2-Naphthyl, besonders bevorzugt Phenyl.

Bevorzugt ist X Halogen.

R¹, R⁴ und R⁴* sind gleich oder verschieden und ausgewählt aus
- Wasserstoff,
- C₁-C₁₈-Alkylgruppen, wie Methyl, Ethyl, n-Propyl, iso-Propyl, n-Butyl, iso-Butyl, sec.-Butyl, tert.-Butyl, n-Pentyl, iso-Pentyl, sec.-Pentyl, neo-Pentyl, 1,2-Dimethylpropyl, iso-Amyl, n-Hexyl, iso-Hexyl, sec.-Hexyl, n-Heptyl, iso-Heptyl n-Octyl, n-Decyl, n-Dodecyl oder n-Octadecyl; bevorzugt C₁-C₁₂-Alkyl wie Methyl, Ethyl, n-Propyl, iso-Propyl, n-Butyl, iso-Butyl, sec.-Butyl, tert.-Butyl, n-Pentyl, iso-Pentyl, sec.-Pentyl, neo-Pentyl, 1,2-Dimethylpropyl, iso-Amyl, n-Hexyl, iso-Hexyl, sec.-Hexyl oder n-Decyl, besonders bevorzugt C₁-C₄-Alkyl wie Methyl, Ethyl, n-Propyl, iso-Propyl, n-Butyl, iso-Butyl, sec.-Butyl und tert.-Butyl;
- Unter den substituierten C₁-C₁₈-Alkylgruppen seien beispielhaft genannt: ein- oder mehrfach halogenierte C₁-C₈-Alkylgruppen wie Fluormethyl, Difluormethyl, Trifluormethyl, Chlormethyl, Dichlormethyl, Trichlormethyl, Brommethyl, Dibrommethyl, Tribrommethyl, Pentafluorethyl, Perfluorpropyl und Perfluorbutyl, besonders bevorzugt sind Fluormethyl, Difluormethyl, Trifluormethyl und Perfluorbutyl;
- einfach gebundenem C₂-C₁₈-Alkenyl mit ein bis 4 isolierten oder konjugierten Doppelbindungen, beispielsweise Vinyl, 1-Allyl, 3-Allyl, ω-Butenyl, ω-Pentenyl, ω-Hexenyl, 1-cis-Buta-1,3-dienyl oder 1-cis -Hexa-1,5-dienyl.
- Unter den substituierten C₂-C₁₈-Alkenylgruppen seien beispielhaft genannt: Isopropenyl, 1-Isoprenyl, α-Styryl, β-Styryl, 1-cis-1,2-Phenylethenyl oder 1-trans-1,2-Phenylethenyl.
- C₃-C₁₂-Cycloalkyl wie Cyclopropyl, Cyclobutyl, Cyclopentyl, Cyclohexyl, Cycloheptyl, Cyclooctyl, Cyclononyl, Cyclodecyl, Cycloundecyl und Cyclododecyl; bevorzugt sind Cyclopentyl, Cyclohexyl und Cycloheptyl;
- unter den substituierten Cycloalkylgruppen seien beispielhaft genannt:
   2-Methylcyclopentyl, 3-Methylcyclopentyl, cis-2,4-Dimethylcyclopentyl, trans-2,4-Dimethylcyclopentyl, cis-2,5-Dimethylcyclopentyl, trans-2,5-Dimethylcyclopentyl, 2,2,5,5-Tetramethylcyclopentyl, 2-Methylcyclohexyl, 3-Methylcyclohexyl, 4-Methylcyclohexyl, cis-2,6-Dimethylcyclohexyl, trans-2,6-Dimethylcyclohexyl, cis-2,6-Diisopropylcyclohexyl, trans-2,6-Diisopropylcyclohexyl, 2,2,6,6-Tetramethylcyclohexyl, 2-Methoxycyclopentyl, 2-Methoxycyclohexyl, 3-Methoxycyclopentyl, 3-Methoxycyclohexyl, 2-Chlorcyclopentyl, 3-Chlorcyclopentyl, 2,4-Dichlorcyclopentyl, 2,2,4,4-Tetrachlorcyclopentyl, 2-Chlorcyclohexyl, 3-Chlorcyclohexyl, 4-Chlorcyclohexyl, 2,5-Dichlorcyclohexyl, 2,2,6,6-Tetrachlorcyclohexyl, 2-Thiomethylcyclopentyl, 2-Thiomethylcyclohexyl, 3-Thio-methylcyclopentyl, 3-Thiomethylcyclohexyl und weitere Derivate;
- C₇-C₁₃-Aralkyl, bevorzugt C₇- bis C₁₂-Phenylalkyl wie Benzyl, 1-Phenethyl, 2-Phenethyl, 1-Phenyl-propyl, 2-Phenyl-propyl, 3-Phenyl-propyl, Neophyl (1-Methyl-l-phenylethyl), 1-Phenyl-butyl, 2-Phenyl-butyl, 3-Phenyl-butyl und 4-Phenyl-butyl, besonders bevorzugt Benzyl;
- C₆-C₁₄-Aryl, beispielsweise Phenyl, 1-Naphthyl, 2-Naphthyl, 1-Anthryl, 2-Anthryl, 9-Anthryl, 1-Phenanthryl, 2-Phenanthryl, 3-Phenanthryl, 4-Phenanthryl und 9-Phenanthryl, bevorzugt Phenyl, 1-Naphthyl und 2-Naphthyl, besonders bevorzugt Phenyl;
- C₆-C₁₄-Aryl wie Phenyl, 1-Naphthyl, 2-Naphthyl, 1-Anthryl, 2-Anthryl, 9-Anthryl, 1-Phenanthryl, 2-Phenanthryl, 3-Phenanthryl, 4-Phenanthryl und 9-Phenanthryl, gleich oder verschieden substituiert durch eine oder mehrere
   - C₁-C₁₈-Alkylgruppen, wie Methyl, Ethyl, n-Propyl, iso-Propyl, n-Butyl, iso-Butyl, sec.-Butyl, tert.-Butyl, n-Pentyl, iso-Pentyl, sec.-Pentyl, neo-Pentyl, 1,2-Dimethylpropyl, iso-Amyl, n-Hexyl, iso-Hexyl, sec.-Hexyl, n-Heptyl, iso-Heptyl n-Octyl, n-Decyl, n-Dodecyl oder n-Octadecyl; bevorzugt C₁-C₁₂-Alkyl wie Methyl, Ethyl, n-Propyl, iso-Propyl, n-Butyl, iso-Butyl, sec.-Butyl, tert.-Butyl, n-Pentyl, iso-Pentyl, sec.-Pentyl, neo-Pentyl, 1,2-Dimethylpropyl, iso-Amyl, n-Hexyl, iso-Hexyl, sec.-Hexyl oder n-Decyl, besonders bevorzugt C₁-C₄-Alkyl wie Methyl, Ethyl, n-Propyl, iso-Propyl, n-Butyl, iso-Butyl, sec.-Butyl und tert.-Butyl;
   - Unter den substituierten C₁-C₈-Alkylgruppen seien beispielhaft genannt: ein- oder mehrfach halogenierte C₁-C₈-Alkylgruppen wie Fluormethyl, Difluormethyl, Trifluormethyl, Chlormethyl, Dichlormethyl, Trichlormethyl, Brommethyl, Dibrommethyl, Tribrommethyl, Pentafluorethyl, Perfluorpropyl und Perfluorbutyl, besonders bevorzugt sind Fluormethyl, Difluormethyl, Trifluormethyl und Perfluorbutyl;
   - C₂-C₁₈-Alkenyl mit ein bis 4 isolierten oder konjugierten Doppelbindungen, beispielsweise Vinyl, 1-Allyl, 3-Allyl, ω-Butenyl, ω-Pentenyl, ω-Hexenyl, 1-cis-Buta-1,3-dienyl oder 1-cis -Hexa-1,5-dienyl.
   - Unter den substituierten C₂-C₁₈-Alkenylgruppen seien beispielhaft genannt: Isopropenyl, 1-Isoprenyl, α-Styryl, β-Styryl, 1-cis-1,2-Phenylethenyl oder 1-trans-1,2-Phenylethenyl.
   - C₃-C₁₂-Cycloalkyl wie Cyclopropyl, Cyclobutyl, Cyclopentyl, Cyclohexyl, Cycloheptyl, Cyclooctyl, Cyclononyl, Cyclodecyl, Cycloundecyl und Cyclododecyl; bevorzugt sind Cyclopentyl, Cyclohexyl und Cycloheptyl;
   - C₇-C₁₃-Aralkyl, bevorzugt C₇- bis C₁₂-Phenylalkyl wie Benzyl, 1-Phenethyl, 2-Phenethyl, 1-Phenyl-propyl, 2-Phenyl-propyl, 3-Phenyl-propyl, Neophyl (1-Methyl-1-phenylethyl), 1-Phenyl-butyl, 2-Phenyl-butyl, 3-Phenyl-butyl und 4-Phenyl-butyl, besonders bevorzugt Benzyl;
   - C₆-C₁₄-Aryl, beispielsweise Phenyl, 1-Naphthyl, 2-Naphthyl, 1-Anthryl, 2-Anthryl, 9-Anthryl, 1-Phenanthryl, 2-Phenanthryl, 3-Phenanthryl, 4-Phenanthryl und 9-Phenanthryl, bevorzugt Phenyl, 1-Naphthyl und 2-Naphthyl, besonders bevorzugt Phenyl;
   - Halogen, beispielsweise Fluor, Chlor, Brom oder Iod, besonders bevorzugt Fluor oder Chlor;
   - C₁-C₆-Alkoxygruppen wie Methoxy, Ethoxy, n-Propoxy, iso-Propoxy, n-Butoxy, iso-Butoxy, sec.-Butoxy, tert.-Butoxy, n-Pentoxy, iso-Pentoxy, n-Hexoxy und iso-Hexoxy, besonders bevorzugt Methoxy, Ethoxy, n-Propoxy und n-Butoxy;
   - C₆-C₁₄-Aryloxygruppen wie Phenoxy, ortho-Kresyloxy, meta-Kresyloxy, para-Kresyloxy, α-Naphthoxy, β-Naphthoxy oder 9-Anthryloxy;
   - Silylgruppen SiR⁵R⁶R⁷, wobei R⁵ bis R⁷ unabhängig voneinander aus Wasserstoff, C₁-C₈-Alkylgruppen, Benzylresten und C₆-C₁₄-Arylgruppen ausgewählt sind; bevorzugt sind die Trimethylsilyl-, Triethylsilyl-, Triisopropylsilyl-, Diethylisopropylsilyl-, Dimethylthexylsilyl-, tert.-Butyldimethylsilyl-, tert.-Butyldiphenylsilyl-, Tribenzylsilyl-, Triphenylsilyl- und die Tri-para-xylylsilylgruppe; besonders bevorzugt sind die Trimethylsilylgruppe und die tert.-Butyldimethylsilylgruppe;
   - Silyloxygruppen OSiR⁵R⁶R⁷, wobei R⁵ bis R⁷ unabhängig voneinander aus Wasserstoff, C₁-C₈-Alkylgruppen, Benzylresten und C₆-C₁₄-Arylgruppen ausgewählt sind; bevorzugt sind die Trimethylsilyloxy-, Triethylsilyloxy-, Triisopropylsilyloxy-, Diethylisopropylsilyloxy-, Dimethylthexylsilyloxy-, tert.-Butyldimethylsilyloxy-, tert.-Butyldiphenylsilyloxy-, Tribenzylsilyloxy-, Triphenylsilyloxyund die Tri-para-xylylsilyloxygruppe; besonders bevorzugt sind die Trimethylsilyloxygruppe und die tert.-Butyldimethylsilyloxygruppe;
- einfach gebundenen fünf- bis sechsgliedrigen stickstoffhaltigen Heteroarylresten wie beispielsweise *N*-Pyrrolyl, Pyrrol-2-yl, Pyrrol-3-yl, *N*-Imidazolyl, 2-Imidazolyl, 4-Imidazolyl, 1,2,4-Triazol-3-yl, 1,2,4-Triazol-4-yl, 2-Pyridyl, 3-Pyridyl, 4-Pyridyl, 3-Pyridazinyl, 4-Pyridazinyl, 2-Pyrimidinyl, 4-Pyrimidinyl, 5-Pyrimidinyl, N-Indolyl und N-Carbazolyl;
- einfach gebundenen fünf- bis sechsgliedrigen stickstoffhaltigen Heteroarylresten wie beispielsweise *N*-Pyrrolyl, Pyrrol-2-yl, Pyrrol-3-yl, *N*-Imidazolyl, 2-Imidazolyl, 4-Imidazolyl, 1,2,4-Triazol-3-yl, 1,2,4-Triazol-4-yl, 2-Pyridyl, 3-Pyridyl, 4-Pyridyl, 3-Pyridazinyl, 4-Pyridazinyl, 2-Pyrimidinyl, 4-Pyrimidinyl, 5-Pyrimidinyl, N-Indolyl und N-Carbazolyl, gleich oder verschieden einfach oder mehrfach substituiert mit
   - C₁-C₁₈-Alkylgruppen, wie Methyl, Ethyl, n-Propyl, iso-Propyl, n-Butyl, iso-Butyl, sec.-Butyl, tert.-Butyl, n-Pentyl, iso-Pentyl, sec.-Pentyl, neo-Pentyl, 1,2-Dimethylpropyl, iso-Amyl, n-Hexyl, iso-Hexyl, sec.-Hexyl, n-Heptyl, iso-Heptyl n-Octyl, n-Decyl, n-Dodecyl oder n-Octadecyl; bevorzugt C₁-C₁₂-Alkyl wie Methyl, Ethyl, n-Propyl, iso-Propyl, n-Butyl, iso-Butyl, sec.-Butyl, tert.-Butyl, n-Pentyl, iso-Pentyl, sec.-Pentyl, neo-Pentyl, 1,2-Dimethylpropyl, iso-Amyl, n-Hexyl, iso-Hexyl, sec.-Hexyl oder n-Decyl, besonders bevorzugt C₁-C₄-Alkyl wie Methyl, Ethyl, n-Propyl, iso-Propyl, n-Butyl, iso-Butyl, sec.-Butyl und tert.-Butyl;
   - Unter den substituierten C₁-C₁₈-Alkylgruppen seien beispielhaft genannt: ein- oder mehrfach halogenierte C₁-C₈-Alkylgruppen wie Fluormethyl, Difluormethyl, Trifluormethyl, Chlormethyl, Dichlormethyl, Trichlormethyl, Brommethyl, Dibrommethyl, Tribrommethyl, Pentafluorethyl, Perfluorpropyl und Perfluorbutyl, besonders bevorzugt sind Fluormethyl, Difluormethyl, Trifluormethyl und Perfluorbutyl;
   - C₂-C₁₈-Alkenyl mit ein bis 4 isolierten oder konjugierten Doppelbindungen, beispielsweise Vinyl, 1-Allyl, 3-Allyl, ω-Butenyl, ω-Pentenyl, ω-Hexenyl, 1-cis-Buta-1,3-dienyl oder 1-cis -Hexa-1,5-dienyl.
   - Unter den substituierten C₂-C₁₈-Alkenylgruppen seien beispielhaft genannt: Isopropenyl, 1-Isoprenyl, α-Styryl, β-Styryl, 1-cis-1,2-Phenylethenyl oder 1-trans-1,2-Phenylethenyl.
   - C₃-C₁₂-Cycloalkyl wie Cyclopropyl, Cyclobutyl, Cyclopentyl, Cyclohexyl, Cycloheptyl, Cyclooctyl, Cyclononyl, Cyclodecyl, Cycloundecyl und Cyclododecyl; bevorzugt sind Cyclopentyl, Cyclohexyl und Cycloheptyl;
   - C₇-C₁₃-Aralkyl, bevorzugt C₇- bis C₁₂-Phenylalkyl wie Benzyl, 1-Phenethyl, 2-Phenethyl, 1-Phenyl-propyl, 2-Phenyl-propyl, 3-Phenyl-propyl, Neophyl (1-Methyl-1-phenylethyl), 1-Phenyl-butyl, 2-Phenyl-butyl, 3-Phenyl-butyl und 4-Phenyl-butyl, besonders bevorzugt Benzyl;
   - C₆-C₁₄-Aryl, beispielsweise Phenyl, 1-Naphthyl, 2-Naphthyl, 1-Anthryl, 2-Anthryl, 9-Anthryl, 1-Phenanthryl, 2-Phenanthryl, 3-Phenanthryl, 4-Phenanthryl und 9-Phenanthryl, bevorzugt Phenyl, 1-Naphthyl und 2-Naphthyl, besonders bevorzugt Phenyl;
   - Halogen, beispielsweise Fluor, Chlor, Brom oder Iod, besonders bevorzugt Fluor oder Chlor;
   - C₁-C₆-Alkoxygruppen wie Methoxy, Ethoxy, n-Propoxy, iso-Propoxy, n-Butoxy, iso-Butoxy, sec.-Butoxy, tert.-Butoxy, n-Pentoxy, iso-Pentoxy, n-Hexoxy und iso-Hexoxy, besonders bevorzugt Methoxy, Ethoxy, n-Propoxy und n-Butoxy;
   - C₆-C₁₄-Aryloxygruppen wie Phenoxy, *ortho*-Kresyloxy, *meta*-Kresyloxy, *para*-Kresyloxy, α-Naphthoxy, β-Naphthoxy oder 9-Anthryloxy;
   - Silylgruppen SiR⁵R⁶R⁷, wobei R⁵ bis R⁷ unabhängig voneinander aus Wasserstoff, C₁-C₈-Alkylgruppen, Benzylresten und C₆-C₁₄-Arylgruppen ausgewählt sind; bevorzugt sind die Trimethylsilyl-, Triethylsilyl-, Triisopropylsilyl-, Diethylisopropylsilyl-, Dimethylthexylsilyl-, tert.-Butyldimethylsilyl-, tert.-Butyldiphenylsilyl-, Tribenzylsilyl-, Triphenylsilyl- und die Tri-para-xylylsilylgruppe; besonders bevorzugt sind die Trimethylsilylgruppe und die tert.-Butyldimethylsilylgruppe;
   - Silyloxygruppen OSiR⁵R⁶R⁷, wobei R⁵ bis R⁷ unabhängig voneinander aus Wasserstoff, C₁-C₈-Alkylgruppen, Benzylresten und C₆-C₁₄-Arylgruppen ausgewählt sind; bevorzugt sind die Trimethylsilyloxy-, Triethylsilyloxy-, Triisopropylsilyloxy-, Diethylisopropylsilyloxy-, Dimethylthexylsilyloxy-, tert.-Butyldimethylsilyloxy-, tert.-Butyldiphenylsilyloxy-, Tribenzylsilyloxy-, Triphenylsilyloxyund die Tri-para-xylylsilyloxygruppe; besonders bevorzugt sind die Trimethylsilyloxygruppe und die tert.-Butyldimethylsilyloxygruppe;

Bevorzugt sind mindestens einer der Reste R⁴ und R⁴* ungleich Wasserstoff. In einer besonders bevorzugten Ausführungsform sind R¹ oder R⁴ ungleich Wasserstoff.
- R²: C₆-C₁₄-Aryl, unsubstituiert oder einfach oder mehrfach gleich oder verschieden substituiert, oder fünf- bis sechsgliedrigen stickstoffhaltigen Heteroarylresten, unsubstituiert oder einfach oder mehrfach gleich oder verschieden substituiert, wobei die Substituenten wie oben stehend definiert sind.
- R³ und R⁸: gleich und verschieden und gewählt aus C₁-C₁₈-Alkyl, C₂-C₁₈-Alkenyl, substituiert oder unsubstituiert, mit ein bis 4 isolierten oder konjugierten Doppelbindungen, C₃-C₁₂-Cycloalkyl, substituiert oder unsubstituiert, C₇-C₁₃-Aralkyl, C₆-C₁₄-Aryl, unsubstituiert oder einfach oder mehrfach gleich oder verschieden substituiert, oder fünf- bis sechsgliedrigen stickstoffhaltigen Heteroarylresten, unsubstituiert oder einfach oder mehrfach gleich oder verschieden substituiert, wobei die Substituenten wie oben stehend definiert sind.

In einer besonders bevorzugten Ausführungsform ist R¹ gewählt aus 2,6-Diisopropylphenyl.

In einer besonders bevorzugten Ausführungsform ist R² Phenyl.
- L¹: wird gewählt aus anorganischen oder organischen Neutralliganden, beispielsweise aus Phosphanen der Formel (R⁸)ₓPH₃₋ₓ oder Aminen der Formel (R⁸)ₓNH₃₋ₓ, wobei x eine ganze Zahl von 0 und 3 bedeutet. Aber auch Ether (R⁸)₂O wie beispielsweise Dialkylether, z.B. Diethylether, oder cyclische Ether, wie beispielsweise Tetrahydrofuran, H₂O, Alkohole (R⁸)OH wie Methanol oder Ethanol, Pyridin, Pyridinderivate der Formel C₅H₅₋ₓ(R⁸)ₓN, wie beispielsweise 2-Picolin, 3-Picolin, 4-Picolin, 2,3-Lutidin, 2,4-Lutidin, 2,5-Lutidin, 2,6-Lutidin oder 3,5-Lutidin, CO, C₁-C₁₂-Alkylnitrile oder C₆-C₁₄-Arylnitrile sind geeignet, wie Acetonitril, Propionitril, Butyronitril oder Benzonitril. Weiterhin können einfach oder mehrfach ethylenisch ungesättigte Doppelbindungssysteme als Ligand dienen, wie Ethenyl, Propenyl, cis-2-Butenyl, trans-2-Butenyl, Cyclohexenyl oder Norbornenyl.

In einer besonderen Ausführungsform können benachbarte Reste R¹ bis R⁴ oder R⁴* der Komplexverbindungen der allgemeinen Formeln I miteinander zu einem 5- bis 12-gliedrigen Ring verbunden sein. Beispielsweise können R³ und R⁴ zusammen sein: -(CH₂)₃- (Trimethylen), -(CH₂)₄- (Tetramethylen), -(CH₂)₅- (Pentamethylen), -(CH₂)₆-(Hexamethylen), -CH₂-CH=CH-, -CH₂-CH=CH-CH₂-, -CH=CH-CH=CH-, -O-CH₂-O-, -O-CHMe-O-, -O-CH-(C₆H₅)-O-, -O-CH₂-CH₂-O-, -O-CMe₂-O-, -NMe-CH₂-CH₂-NMe-, -NMe-CH₂-NMe- oder -O-SiMe₂-O- mit Me = CH₃.

Die erfindungsgemäßen Komplexverbindungen sind synthetisch gut zugänglich.

Zur Synthese der erfindungsgemäßen Komplexverbindungen der allgemeinen Formel I geht man im Allgemeinen von einem Liganden der allgemeinen Formel II aus, 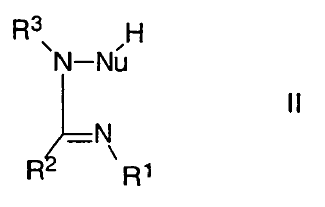 in dem die Variablen wie vorstehend definiert sind.

Die Liganden der allgemeinen Formel II werden mit Metallverbindungen der allgemeinen Formel MX₂ umgesetzt. Dabei kann MX₂ optional durch Neutralliganden stabilisiert werden. Als Neutralliganden bieten sich die gängigen Liganden der Komplexchemie an, wie beispielsweise cyclische und nichtcyclische Ether, Amine, Diamine, Nitrile, Isonitrile oder Phosphine. Besonders bevorzugt sind Diethylether, Tetrahydrofuran, 1,2-Dimethoxyethan, Tetramethylethylendiamin, Acetonitril oder Triphenylphosphan.

Die Umsetzung gelingt in Abwesenheit von Säuren und Basen durch einfaches Vermischen in einem Lösemittel. Als Lösemittel haben sich Lösemittel wie Benzol, Toluol, ortho-Xylol, meta-Xylol, para-Xylol, Ethylbenzol oder Mischungen derselben als geeignet erwiesen, des Weiteren nichtcyclische oder cyclische Ether wie 1,2-Dimethoxyethan, Tetrahydrofuran oder Diethylether, und außerdem chlorierte Kohlenwasserstoffe wie beispielsweise Methylenchlorid oder Chloroform.

Als Temperaturbereich kommen -100°C bis +150°C in Frage, bevorzugt -78°C bis +100°C. Dabei sollte die Reaktionstemperatur den Schmelzpunkt des Lösemittels nicht unterschreiten; Temperaturen oberhalb des Siedepunkts des betreffenden Lösemittels lassen sich in Autoklavenversuchen verwirklichen. Bevorzugt ist, dass man die Umsetzung unter Ausschluss von Sauerstoff und Feuchtigkeit durchführt.

Als Molverhältnisse zwischen Ligand und M sind solche im Bereich von 5:1 bis 1:5 geeignet. Da jedoch die Liganden der allgemeinen Formel II die aufwändiger zugänglichen Reaktionspartner sind, sind Molverhältnisse Ligand : M im Bereich von 1:1 bis 1:3 bevorzugt, besonders bevorzugt sind stöchiometrische Mengen.

Die Reinigung der erfindungsgemäßen Komplexverbindungen der allgemeinen Formel I a gelingt durch die in der metallorganischen Chemie üblichen Methoden, wobei Kristallisation und Ausfällen besonders bevorzugt ist, weiterhin sind Filtrationen über Filterhilfsmittel wie beispielsweise Celite® geeignet.

Die Herstellung der Liganden der allgemeinen Formel II ist an sich bekannt und gelingt besonders gut durch Umsetzung eines Amides der allgemeinen Formel III, 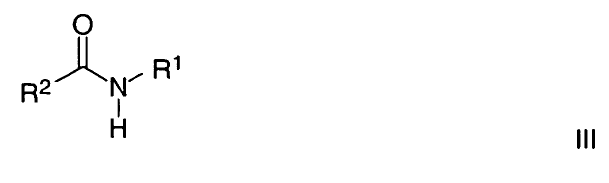 das ein acides α-H-Atom am Stickstoff trägt, mit einem Halogenierungsmittel wie beispielsweise SO₂Cl₂, PCl₃ oder POCl₃ und anschließende Reaktion mit einer nucleophilen Verbindung der allgemeinen Formel IV, 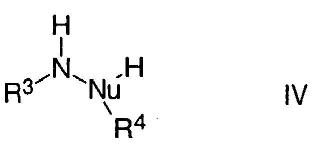 wobei in den Verbindungen III und IV die Variablen wie eingangs definiert sind, in Gegenwart einer Base.

Als Base können vorzugsweise tertiäre Amine eingesetzt werden wie beispielsweise Triethylamin, Diisopropylethylamin oder Pyridin. Als Lösemittel haben sich Lösemittel wie Alkohole oder chlorierte Kohlenwasserstoffe wie beispielsweise Methylenchlorid oder Chloroform oder Mischungen derselben als geeignet erwiesen, des Weiteren nichtcyclische oder cyclische Ether wie 1,2-Dimethoxyethan, Tetrahydrofuran oder Diethylether.

Diese Reaktion ist im Allgemeinen nach einigen Minuten bis zu wenigen Stunden beendet, sinnvoll ist eine Reaktionsdauer von 30 Minuten bis 10 Stunden, bevorzugt sind 1 bis 5 Stunden. Die Temperaturbedingungen sind im Allgemeinen unkritisch, eine Durchführung bei Temperaturen von -90°C bis +30°C, in Ausnahmen bis 50°C hat sich als bevorzugt erwiesen.

Bevorzugt ist, dass man die Umsetzung unter Ausschluss von Sauerstoff und Feuchtigkeit durchführt.

Als Molverhältnisse zwischen III und IV sind solche im Bereich von 5:1 bis 1:5 geeignet, bevorzugt sind Molverhältnisse III : IV im Bereich von 3:1 bis 1:3, besonders bevorzugt sind stöchiometrische Mengen.

Es wurde gefunden, dass die erfindungsgemäßen Komplexe der allgemeinen Formel I geeignet sind, um Olefine zu polymerisieren. Besonders gut polymerisieren und copolymerisieren sie Ethylen und Propylen zu hochmolekularen Polymeren.

Damit die erfindungsgemäßen Komplexe der allgemeinen Formeln I katalytisch aktiv sind, müssen sie aktiviert werden. Geeignete Aktivatoren für die Komplexverbindungen der allgemeinen Formel I sind ausgewählte Aluminium- oder Bor-Verbindungen mit elektronenziehenden Resten (z.B. Trispentafluorphenylboran, Trispentafluorphenylaluminium, *N,N*-Dimethylanilinium-tetrakis-pentafluorphenylborat, Tri-n-butylammonium-tetrakis-pentafluorphenylborat, *N, N*-Dimethylanilinium-tetrakis-(3,5-bisperfluormethyl)-phenylborat, Tri-n-butylammonium-tetrakis-(3,5-bisperfluormethyl)-phenylborat sowie Tritylium-tetrakispentafluorphenylborat). Bevorzugt sind Dimethylanilinium-tetrakis-pentafluorphenylborat, Tritylium-tetrakispentafluorphenylborat sowie Trispentafluorphenylboran.

Verwendet man Bor- oder Aluminiumverbindungen als Aktivatoren für die erfindungsgemäßen Komplexverbindungen, so setzt man sie im Allgemeinen in einem molaren Verhältnis von 1 : 10 bis 10 : 1, bezogen auf M, ein; bevorzugt 1 : 2 bis 5 : 1 und besonders bevorzugt in stöchiometrischen Mengen.

Eine andere geeignete Klasse von Aktivatoren sind Aluminoxane. Die Struktur der Aluminoxane ist nicht genau bekannt. Es handelt sich bei ihnen um Produkte, die durch vorsichtige partielle Hydrolyse von Aluminiumalkylen erhalten werden (s. DE-A 30 07 725). Diese Produkte liegen nicht rein vor, sondern als Gemische von offenkettigen und cyclischen Strukturen des Typs V a und V b. Diese Gemische liegen vermutlich in einem dynamischen Gleichgewicht zueinander vor.

In Formel V a und V b sind die Reste R^{m} unabhängig voneinander 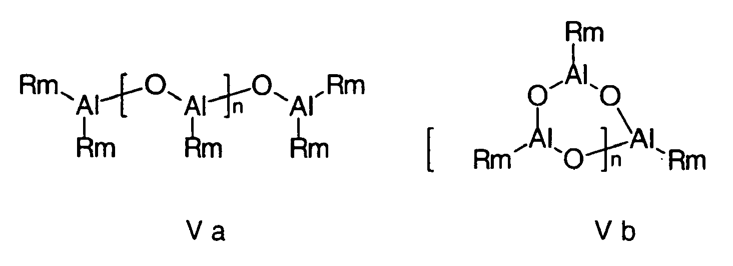
- C₁-C₁₂-Alkyl wie Methyl, Ethyl, n-Propyl, iso-Propyl, n-Butyl, iso-Butyl, sec.-Butyl, tert.-Butyl, n-Pentyl, iso-Pentyl, sec.-Pentyl, neo-Pentyl, 1,2-Dimethylpropyl, iso-Amyl, n-Hexyl, iso-Hexyl, sec.-Hexyl, n-Heptyl, iso-Heptyl, n-Octyl, n-Nonyl, n-Decyl, und n-Dodecyl; bevorzugt C₁-C₆-Alkyl wie Methyl, Ethyl, n-Propyl, iso-Propyl, n-Butyl, iso-Butyl, sec.-Butyl, tert.-Butyl, n-Pentyl, iso-Pentyl, sec.-Pentyl, neo-Pentyl, 1,2-Dimethylpropyl, iso-Amyl, n-Hexyl, iso-Hexyl, sec.-Hexyl, besonders bevorzugt ist Methyl;
- C₃-C₁₂-Cycloalkyl wie Cyclopropyl, Cyclobutyl, Cyclopentyl, Cyclohexyl, Cycloheptyl, Cyclooctyl, Cyclononyl, Cyclodecyl, Cycloundecyl und Cyclododecyl; bevorzugt sind Cyclopentyl, Cyclohexyl und Cycloheptyl;
- C₇- bis C₂₀-Aralkyl, bevorzugt C₇- bis C₁₂-Phenylalkyl wie Benzyl, 1-Phenethyl, 2-Phenethyl, 1-Phenyl-propyl, 2-Phenyl-propyl, 3-Phenyl-propyl, 1-Phenyl-butyl, 2-Phenyl-butyl, 3-Phenyl-butyl und 4-Phenyl-butyl, besonders bevorzugt Benzyl, oder
- C₆-C₁₄-Aryl wie Phenyl, 1-Naphthyl, 2-Naphthyl, 1-Anthryl, 2-Anthryl, 9-Anthryl, 1-Phenanthryl, 2-Phenanthryl, 3-Phenanthryl, 4-Phenanthryl und 9-Phenanthryl, bevorzugt Phenyl, 1-Naphthyl und 2-Naphthyl, besonders bevorzugt Phenyl; und

- n: ist eine ganze Zahl von 0 bis 40, bevorzugt von 1 bis 25 und besonders bevorzugt von 2 bis 22.

In der Literatur werden auch käfigartige Strukturen für Aluminoxane diskutiert (Y. Koide, S.G. Bott, A.R. Barron *Organometallics* **1996,** *15,* 2213-26; A.R. Barron *Macromol. Symp.* **1995,** *97,* 15-25). Unabhängig davon, wie die Struktur der Aluminoxane tatsächlich aussieht, sind sie als Aktivatoren der erfindungsgemäßen Metallkomplexe der allgemeinen Formeln I a oder I b geeignet.

Gemische verschiedener Aluminoxane sind in den Fällen besonders bevorzugte Aktivatoren, in denen in einer Lösung eines Paraffins, beispielsweise n-Heptan oder Isododekan, polymerisiert wird. Eine besonders bevorzugtes Gemisch ist das kommerziell bei der Firma Witco GmbH erhältliche CoMAO mit einer Formel von [(CH₃)_{0,9}(iso-C₄H₉)_{0,1}AlO]ₙ.

Um die Komplexverbindungen der allgemeinen Formel I mit Aluminoxanen zu aktivieren, ist im Allgemeinen ein Überschuss von Aluminoxan, bezogen auf M, notwendig. Sinnvolle Molverhältnisse M : Al liegen im Bereich von 1 : 10 bis 1 : 10.000, bevorzugt 1: 50 bis 1 : 1000 und besonders bevorzugt 1: 100 bis 1:500.

Der gewählte Komplex der allgemeinen Formeln I und der Aktivator bilden zusammen ein Katalysatorsystem.

Durch Zugabe von weiterem Aluminiumalkyl der allgemeinen Formel Al(R^{m})₃ oder Aluminoxanen kann die Aktivität des erfindungsgemäßen Katalysatorsystems erhöht werden; Aluminiumalkyle der allgemeinen Formel Al(R^{m})₃ oder Aluminoxane können auch als Molmassenregler wirken. Ein weiterer effektiver Molmassenregler ist Wasserstoff. Besonders gut kann man die Molmasse durch die Reaktionstemperatur und den Druck regeln. Für den Fall, dass die Verwendung einer Bor-Verbindung wie oben beschrieben gewünscht ist, ist die Zugabe eines Aluminiumalkyls der allgemeinen Formel Al(R^{m})₃ besonders bevorzugt.

Druck- und Temperaturbedingungen während der Polymerisation können in weiten Grenzen gewählt werden. Als Druck hat sich ein Bereich von 0,5 bar bis 4000 bar als geeignet erwiesen, bevorzugt sind 10 bis 75 bar oder Hochdruckbedingungen von 500 bis 2500 bar. Als Temperatur hat sich ein Bereich von 0 bis 120°C als geeignet erwiesen, bevorzugt sind 40 bis 100°C und besonders bevorzugt 50 bis 85°C.

Als Monomer sind die folgenden Olefine zu nennen: Ethylen, Propylen, 1-Buten, 1-Penten,
1-Hexen, 1-Octen, 1-Decen oder 1-Undecen, wobei Propylen und Ethylen bevorzugt und Ethylen besonders bevorzugt ist. Weiterhin ist Styrol als Monomer zu nennen.

Als Comonomere sind α-Olefine geeignet, wie beispielsweise 0,1 bis 20 mol-% 1-Buten,
1-Penten, 1-Hexen, 4-Methyl-1-Penten, 1-Octen, 1-Decen oder 1-Undecen. Aber auch Isobuten und Styrol sind geeignete Comonomere, des weiteren interne Olefine wie beispielsweise Cyclopenten, Cyclohexen, Norbornen und Norbornadien oder auch 0,1 bis 50 mol-% Kohlenmonoxid.

Neben anderen α-Olefinen als Comonomeren, wie beispielsweise Propen, 1-Buten, 1-Hexen, 1-Octen oder 1-Decen, lassen sich mit Hilfe des erfindungsgemäßen Katalysatorsystems auch polare Comonomere einbauen, wobei 0,1 bis 50 mol-% Comonomer verwendet werden können. Bevorzugt sind
- Acrylate wie Acrylsäure, Acrylsäuremethylester, Acrylsäureethylester, Acrylsäure-(2-ethyl)-hexylester, Acrylsäure-n-butylester oder Acrylsäure-tert.-butylester;
- Methacrylsäure, Methacrylsäuremethylester, Methacrylsäureethylester, Methacrylsäure-n-butylester oder Methacrylsäuretert.-butylester;
- vinylaromatische Verbindungen wie Styrol;
- Vinylcarboxylate, wobei Vinylacetat besonders bevorzugt ist,
- Ungesättigte Dicarbonsäuren, besonders bevorzugt ist Maleinsäure,
- ungesättigte Dicarbonsäurederivate, besonders bevorzugt sind Maleinsäureanhydrid und Maleinsäurealkylimide wie beispielsweise Maleinsäuremethylimid.

Weiterhin lassen sich Terpolymere mit mindestens 2 der oben aufgeführten Monomeren sowie Ethylen herstellen.

Als Lösemittel haben sich Toluol, ortho-Xylol, meta-Xylol, para-Xylol oder Ethylbenzol als geeignet erwiesen sowie Mischungen derselben, weiterhin - bei Hochdruckbedingungen - überkritisches Ethylen.

Die erfindungsgemäßen Katalysatorsysteme polymerisieren Olefine zu Polyolefinen mit sehr hohem Molekulargewicht.

Die erfindungsgemäßen Katalysatorsysteme lassen sich bei der Polymerisation mit Wasserstoff regeln, d.h. durch Zugabe von Wasserstoff lässt sich das Molekulargewicht der durch das erfindungsgemäße Katalysatorsystem erhältlichen Polymere senken. Bei genügend Wasserstoffzugabe werden Polyolefinwachse erhalten. Die bevorzugte Konzentration des Wasserstoffs ist auch von der Art der verwendeten Polymerisationsanlage abhängt.

Damit die erfindungsgemäßen Katalysatorsysteme in modernen Polymerisationsverfahren wie Suspensionsverfahren, Massepolymerisationsverfahren oder Gasphasenverfahren eingesetzt werden können, ist es notwendig, sie auf einem festen Träger zu immobilisieren. Andernfalls kann es zu Morphologieproblemen des Polymers (Brokken. Wandbeläge, Verstopfungen in Leitungen oder Wärmetauschern) kommen, die zum Abschalten der Anlage zwingen. Ein solches immobilisiertes Katalysatorsystem wird als Katalysator bezeichnet.

Die erfindungsgemäßen Katalysatorsysteme lassen sich auf festen Trägermaterialien abscheiden. Als Trägermaterialien kommen z.B. poröse Metalloxide von Metallen der Gruppen 2 bis 14 oder Mischungen derselben in Frage, weiterhin Schichtsilikate und Zeolithe. Bevorzugte Beispiele für Metalloxide der Gruppen 2 bis 14 sind SiO₂, B₂O₃, Al₂O₃, MgO, CaO und ZnO. Bevorzugte Schichtsilikate sind Montmorrilonite oder Bentonite; als bevorzugter Zeolith wird MCM-41 eingesetzt.

Besonders bevorzugte Trägermaterialien sind sphärische Kieselgele und Alumosilikatgele der allgemeinen Formel SiO₂·a Al₂O₃, wobei a allgemein für eine Zahl im Bereich von 0 bis 2 steht, bevorzugt 0 bis 0,5. Derartige Kieselgele sind im Handel erhältlich, z.B.

Silica Gel SG 332, Sylopol® 948 oder 952 oder S 2101 der Fa. W.R. Grace oder ES 70X der Fa. Crosfield.

Als Partikelgröße des Trägermaterials haben sich mittlere Teilchendurchmesser von 1 bis 300 µm bewährt, bevorzugt von 20 bis 80 µm, wobei der Teilchendurchmesser durch bekannte Methoden wie Siebmethoden bestimmt wird. Das Porenvolumen dieser Träger beträgt 1,0 bis 3,0 ml/g, bevorzugt von 1,6 bis 2,2 ml/g und besonders bevorzugt von 1,7 bis 1,9 ml/g. Die BET-Oberfläche beträgt 200 bis 750 m²/g, bevorzugt 250 bis 400 m²/g.

Um dem Trägermaterial anhaftende Verunreinigungen, insbesondere Feuchtigkeit, zu entfernen, können die Trägermaterialien vor der Dotierung ausgeheizt werden, wobei sich Temperaturen von 45 bis 1000°C eignen. Temperaturen von 100 bis 750°C sind für Kieselgele und andere Metalloxide besonders geeignet. Dieses Ausheizen kann über einen Zeitraum von 0,5 bis 24 Stunden erfolgen, wobei Ausheizzeiten von 1 bis 12 Stunden bevorzugt sind. Die Druckbedingungen sind vom gewählten Verfahren abhängig; das Ausheizen kann in einem Festbettverfahren, einem gerührten Kessel oder aber in einem Fließbettverfahren erfolgen. Ganz allgemein kann das Ausheizen bei Atmosphärendruck erfolgen. Vorteilhaft sind jedoch verminderte Drücke von 0,1 bis 500 mbar, besonders vorteilhaft ist ein Bereich von 1 bis 100 mbar und ganz besonders vorteilhaft ein Bereich von 2 bis 20 mbar. Für Fließbettverfahren hingegen empfiehlt es sich, bei leicht erhöhtem Druck zu arbeiten, wobei der Druck in einem Bereich von 1,01 bar bis 5 bar, bevorzugt 1,1 bis 1,5 bar gewählt wird.

Eine chemische Vorbehandlung des Trägermaterials mit einer Alkylverbindung wie Aluminiumalkyl, Lithiumalkyl oder einem Alumoxan ist ebenfalls möglich.

Für eine Polymerisation im Suspensionsverfahren werden solche Suspensionsmittel verwendet, in denen das gewünschte Polymer nicht oder nur in geringem Ausmaß löslich ist, weil andernfalls in den Anlagenteilen, in denen das Produkt vom Suspensionsmittel abgetrennt wird, Beläge des Produkts auftreten und zu wiederholten Abschaltungen und Reinigungsoperationen zwingen. Geeignete Suspensionsmittel sind gesättigte Kohlenwasserstoffe wie beispielsweise Propan, n-Butan, Isobutan, n-Pentan, Isopentan, n-Hexan, Isohexan und Cyclohexan, wobei Isobutan bevorzugt ist.

Druck- und Temperaturbedingungen während der Polymerisation können in weiten Grenzen gewählt werden. Als Druck hat sich ein Bereich von 0,5 bar bis 150 bar als geeignet erwiesen, bevorzugt sind 10 bis 75 bar. Als Temperatur hat sich ein Bereich von 0 bis 120°C als geeignet erwiesen, bevorzugt sind 40 bis 100°C.

Als Monomer sind die folgenden Olefine zu nennen: Ethylen, Propylen, 1-Buten, 1-Penten, 1-Hexen, 1-Octen, 1-Decen oder 1-Undecen.

Als Comonomere sind α-Olefine geeignet, wie beispielsweise 0,1 bis 20 mol-% 1-Buten, 1-Penten, 1-Hexen, 4-Methyl-1-Penten, 1-Octen, 1-Decen oder 1-Undecen. Aber auch Isobuten und Styrol sind geeignete Comonomere, des weiteren interne Olefine wie beispielsweise Cyclopenten, Cyclohexen, Norbornen und Norbornadien. Weiterhin sind 0,1 bis 50 mol-% Kohlenmonoxid geeignet.

Die erfindungsgemäßen Katalysatoren weisen insgesamt ein verfahrenstechnisch vorteilhaftes Anwendungsprofil auf.

Die erfindungsgemäßen Katalysatoren haben sich weiterhin als Wasserstoff-regelbar erwiesen, d.h. durch Zugabe von Wasserstoff lässt sich das Molekulargewicht der durch die erfindungsgemäßen Katalysatoren erhältlichen Polymere senken. Bei genügend Wasserstoffzugabe werden Wachse erhalten, wobei die erforderliche Wasserstoffkonzentration auch von der Art der verwendeten Polymerisationsanlage abhängt. Bei Wasserstoffzugabe steigt im Allgemeinen die Aktivität der erfindungsgemäßen Katalysatoren.

Die erfindungsgemäßen Katalysatoren können auch gemeinsam mit einem oder mehreren anderen, an sich bekannten Polymerisationskatalysatoren verwendet werden. So können sie beispielsweise zusammen mit
- Ziegler-Natta-Katalysatoren,
- geträgerten Metallocenkatalysatoren der Übergangsmetalle der Gruppen 4 bis 6 des Periodensystems der Elemente,
- Katalysatoren der späten Übergangsmetalle (WO 96/23010),
- Fe- oder Co-Komplexen mit Pyridyldiiminliganden, wie sie in WO 98/27124 offenbart werden,
- oder auch Chromoxidkatalysatoren nach Phillips eingesetzt werden.

Dabei ist es einerseits möglich, verschiedene Katalysatoren miteinander zu mischen und gemeinsam zu dosieren oder cogeträgerte Komplexe auf einem gemeinsamen Träger zu verwenden oder auch verschiedene Katalysatoren getrennt an derselben oder an verschiedenen Stellen in das Polymerisationsgefäß zu dosieren.

Nachfolgende Arbeitsbeispiele erläutern die Erfindung.

### Allgemeine Vorbemerkungen:

Alle Arbeiten wurden, wenn nicht anders beschrieben, unter Ausschluss von Luft und Feuchtigkeit unter Verwendung von Standard-Schlenk-Techniken hergestellt. Geräte und Chemikalien waren entsprechend vorbereitet. Die Polymerviskosität wurde nach ISO 1628-3 bestimmt.

### 1. Darstellung der Liganden

### 1.1. Darstellung von Ligand II.1

Die Synthese der protonierten Liganden wird beispielhaft durch die Beschreibung der Synthese von II.1 erläutert. 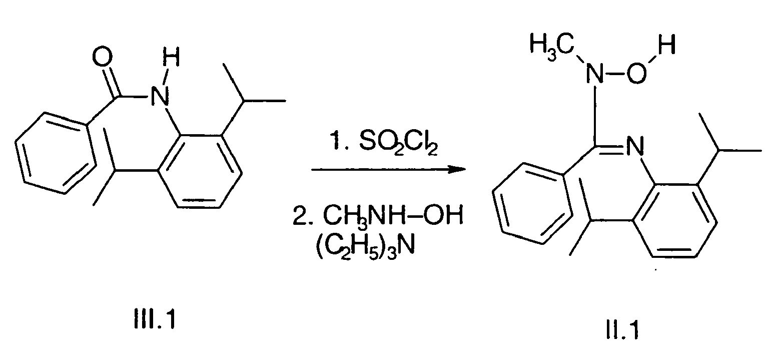
a) 1.98 g N-(2,6-Diisopropylphenyl)benzamid (7,0 mmol) III.1 wurden in einem trockenen und mit Argon gespülten Schlenkrohr vorgelegt. Nach Zugabe von 10 ml Thionylchlorid (137 mmol) wurde die Reaktionslösung 60 min unter Rückfluss erhitzt.
   Überschüssiges SOCl₂ wurde am Hochvakuum abestilliert, das zurückbleibende gelbe Öl in 20 ml Methylenchlorid (absolut) gelöst.
b) In einem ausgeheizten, mit Argon gespülten Schlenkrohr wurde das gelbe N,O-Dimethylhydroxylamin-Hydrochlorid (0,78 g, 8,0 mmol) vorgelegt, in absolutem Ethanol (50 ml) gelöst und mit 2.2 ml Triethylamin (16 mmol) aktiviert.

Über einen Tropftrichter wurde das unter a) hergestellte und in Methylenchlorid gelöste Imidchlorid III.1 bei - 45 °C innerhalb von 45 min der Lösung b) langsam zugegeben. Nach Anwärmen auf Raumtemperatur wird die Reaktionslösung 1 h lang gerührt (Farbwechsel: grünlich → zitronengelb). Durch anschließende Dünnschichtchromatographie (Diethylether/n-Hexan = 1/1) konnte kein III.1 mehr nachgewiesen werden.

Die Reaktionslösung wurde auf Wasser (ca. 100 ml) gegossen, das Produkt mit je 50 ml Diethylether 3 x extrahiert. Die vereinigten organischen Phasen wurden mit Na₂SO₄ getrocknet und das Trockenmittel abfiltriert. Nach Abzug des Lösungsmittels am Rotationsverdampfer wurde das entstehende zähflüssige Öl am Hochvakuum getrocknet.

Ausbeute: 2.11 g (93 %), Summenformel: C₂₁H₂₈N₂O, Farbe: braun ¹H-NMR (CDCl₃): 0,91 (6H, d, CH(CH₃)₂, J = 7,0 Hz), 1.06 (6H, d, CH(CH₃)₂, J = 7,0 Hz), 2,89 (2H, sept, 2 x CH(CH₃)₂, J = 7,0 Hz), 3.15 (3H, s, N-CH₃), 3,49 (3H, s, O-CH₃), 6,82 - 6,89 (3H, m, Phenyl), 7,13 (5H, s, Phenyl).
¹³C-NMR (CDCl₃): 21,9, 23,9 (CH(CH₃)₂), 28,0 (CH(CH₃)₂), 37,0 (N-CH₃), 60,2 (O-CH₃), 122,4, 122,5, 127,5, 128,1, 128,8 (C-Phenyl), 137,1 (C=N-C, quartäres C, Phenyl), 144,0 (C=N).
IR (KBr, cm⁻¹): 2962 (m), 2931 (m), 1634 (vs), 1602 (m), 1590 (m), 1461 (m), 1436 (m), 1360 (w), 1324 (m), 1256 (w), 1181 (w), 1104 (m), 1057 (w), 1030 (w), 1007 (m), 778 (m), 760 (m), 722 (w), 700 (vs).
MS (EI): M⁺ = 324,3m/z

### Beispiel 1.2 Darstellung von Ligand II.2

In einem ausgeheizten, mit Argon gespülten Schlenkrohr wurde das symmetrisch substituierte N,N'-Dimethylhydrazin-Hydrochlorid (0,55 g, 4,1 mmol) vorgelegt und in 20 ml Methylenchlorid (abs.) suspendiert. Die Zugabe von 1.73 ml Triethylamin (12.4 mmol) lieferte eine trübe, milchige Lösung.

Nach Abkühlung der Reaktionslösung auf - 70 °C werden per Tropftrichter 10 ml Verbindung III.1 (Stammlösung, c = 0,108 g/ml) innerhalb von 30 min langsam zugegeben. Die zunächst orange gefärbte Lösung wurde nach Entfernung des Kältebades innerhalb von 5 min gelb. Das N,N'-Dimethylhydrazin ging dabei komplett in Lösung, die Reaktion war nach 1 h bei Raumtemperatur abgeschlossen, wie durch Dünnschichtchromatographie gezeigt wurde.

Die Reaktionslösung wurde auf Wasser (ca. 100 ml) gegossen, das Produkt mit je 50 ml Diethylether 3 x extrahiert. Zur besseren Phasentrennung wurden 50 ml gesättigter Kochsalz-Lösung zugesetzt. Die vereinigten organischen Phasen wurden mit Na₂SO₄ getrocknet und das Trockenmittel abfiltriert. Nach Abzug des Lösungsmittels am Rotationsverdampfer wurde das entstehende zähflüssige Öl am Hochvakuum getrocknet. Fällungsversuche des Zielproduktes aus Ether/Hexan-Gemsichen scheiterten, jedoch entstand nach 30-minütigem Abzug des Lösungsmittels (zuerst Ether, dann Hexan) ein analysenreiner, pulveriger, brauner Feststoff.

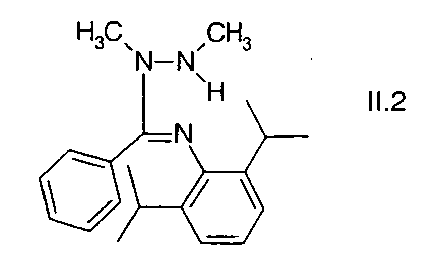

Ausbeute: 1.10 g (94 %), Summenformel: C₂₁H₂₉N₂O, Farbe: braun ¹H-NMR (CDCl₃): 0,94 (6H, d, CH(CH₃)₂, J = 7,0 Hz), 1,06 (6H, d, CH(CH₃)₂, J = 6,6 Hz), 2,64 (3H, s, CH₃-NH), 2,90 (3H, s, N-CH₃), 2,94 (2H, sept, 2 x CH(CH₃)₂), 6,78 - 6,86 (3H, m, Phenyl), 7,01 - 7,14 (5H, m, Phenyl).
¹³C NMR (CDCl₃): 21,8, 24,1 (CH(CH₃)₂), 28,1 (CH(CH₃)₂), 36,4 (NH-CH₃), 39,2 (N-CH₃), 122,1, 122,2, 127,8, 128,1, 128,8, 133,1, 138,2 (C-Phenyl), 144,7 (C=N-C, quartäres C, Phenyl), 157,3 (C=N).
IR (KBr, cm⁻¹): 3244 (w), 3062 (w), 3022 (w), 2973 (m), 2960 (m), 1609 (vs), 1596 (s), 1586 (vs), 1576 (s), 1492 (w), 1439 (m), 1382 (m), 1364 (s), 1329 (m), 1262 (m), 1183 (w), 1111 (m), 1069 (s), 1046 (m), 1025 (s), 924 (m), 845 (s), 824 (m), 808 (w), 799 (m), 772 (vs), 760 (vs), 714 (vs), 700 (vs) MS (EI): M⁺ = 323,3 m/z

### Beispiel 1.3: Darstellung von Ligand II.3

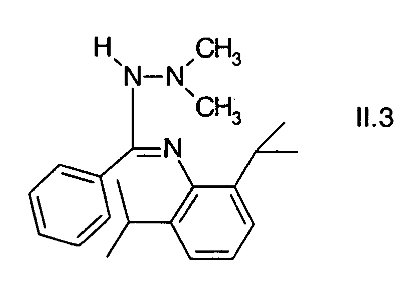

In einem ausgeheizten, mit Argon gespülten Schlenkrohr wurde käufliches N,N-Dimethylhydrazin (0,58 ml, 0,46 g, 7,7 mmol) vorgelegt und in absolutem Ethanol (50 ml) gelöst.

Über einen Tropftrichter wurde das in Methylenchlorid gelöste III.1 (10 ml, 1,08 g, 3,6 mmol, c = 0,115 g/ml) bei - 45 °C innerhalb von 60 min langsam zugegeben. Nach Anwärmen auf Raumtemperatur wurde die Reaktionslösung 1 h lang gerührt (Farbwechsel: farblos → gelb). Das bei der Reaktion entstehende Hydraziniumsalz fiel aus, eine trübe Suspension entstand. Die Reaktion wurde dünnschichtchromatographisch kontrolliert (Diethylether/Hexan = 1/1).

Die Reaktionslösung wurde auf Wasser (ca. 100 ml) gegossen, das Produkt mit je 50 ml Diethylether 3 x extrahiert. Die vereinigten organischen Phasen wurden mit Na₂SO₄ getrocknet und das Trockenmittel abfiltriert. Nach Abzug des Lösungsmittels am Rotationsverdampfer wurde das entstehende zähflüssige Öl am Hochvakuum getrocknet.

Ausbeute: 1,15 g (99 %), Summenformel: C₂₁H₂₉N₃, Farbe: braun ¹H-NMR (CDCl₃) : 0,88 (6H, d, CH(CH₃)₂, J = 6,9 Hz), 1.10 (6H, d, CH(CH₃)₂, J = 6,9 Hz), 2,57 (6H, s, N(CH₃)₂), 3,13 (2H, sept, 2 x CH(CH₃)₂, J = 6,9 Hz), 6,98 (2H, pseudo-d, Phenyl), 7,07 - 7,21 (6H, m, Phenyl), 7,95 (1H, s, N-H)
¹³C-NMR (CDCl₃): 21,9, 24,9 (CH(CH₃)₂), 26,3 (CH(CH₃)₂), 46,7 (N(CH₃)₂), 123,3, 126,9, 127,6, 128,5, 129,1 (C-Phenyl), 132,9, 134,3 (Anilin-C(2,6), quartäre C), 145,2 (C=N-C, quartäres C, Phenyl), 159,7 (C=N)

**Tabelle 1: Übersicht über Liganden der allgemeinen Formel II**

| Verbindung | R¹ | R² | R³ | R⁴ | Nu |
|---|---|---|---|---|---|
| II.1 | 2,6-(*i*-C₃H₇)₂C₆H₃ | C₆H₅ | CH₃ | CH₃ | O |
| II.2 | 2,6-(*i*-C₃H₇)₂C₆H₃ | C₆H₅ | CH₃ | CH₃ | N-H |
| II.3 | 2,6-(*i*-C₃H₇)₂C₆H₃ | C₆H₅ | CH₃ | H | N-CH₃ |
| i-C₃H₇: iso-Propyl; | | | | | |

### 2. Synthesen von Komplexverbindungen der allgemeinen Formel I

### 2.1. Synthese von Komplexverbindung I.1

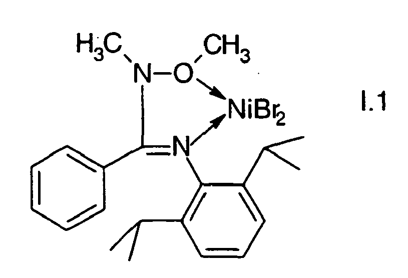

In einem ausgeheizten und mit Argon gespülten Schlenkrohr wurde der Ligand II.1 (0.97 g, 3.0 mmol) in 20 ml Methylenchlorid (absolut) gelöst und nach Zugabe des durch Dimethoxyethan stabilisierten Übergangsmetallhalogenids (NiBr₂ x 2 DME, 1,25 g, 3,1 mmol) bei Raumtemperatur gerührt. Folgender Farbwechsel wurde beobachtet: gelblich → trüb orange (nach 10 s) → trüb braun (nach 1/2 min) → trüb grün. Nach 10 min entstand eine dunkelgrün gefärbte Suspension, deren Farbe auch nach 48 h Rühren unverändert blieb.

Nach Zugabe von 60 ml Methylenchlorid (absolut) wurde das in leichtem Überschuss zugesetzte, nicht umgesetzte NiBr₂ x 2 DME durch Filtration (G4-Fritte, ohne Celite®) abgetrennt. Das klare, dungelgrün gefärbte Filtrat wurde am Hochvakuum bis zur Trockne eingeengt. Ein pulverig, grüner Komplex I.1 wurde isoliert.

Ausbeute: 1.53 g (94 %), Summenformel: C₂₁H₂₈Br₂N₂NiO, Farbe: grün ¹H-NMR (CD₂Cl₂): schwach paramagnetisch, 1,10 - 1,49 (12H, m, 2 x CH(CH₃)₂), 2,97 - 3,56 (8H, m, 2 x CH(CH₃)₂, N-CH₃, O-CH₃)

### Beispiel 2.2 Synthese von Komplexverbindung I.2

### Beispiel 2.1 wurde wiederholt, aber unter Verwendung von Ligand II.2

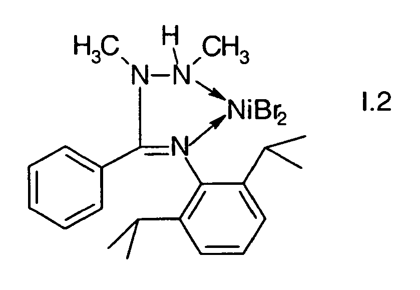

Ausbeute: 0,70 g (95 %), Summenformel: C₂₁H₂₉Br₂N₃Ni, Farbe: beige 1H-NMR (CD₂Cl₂): 1,76, 5,16, 5,41, 15,38, 19,63, 22,57, Verbindung ist paramagnetisch, es kann keine Zuordnung getroffen werden.

### Beispiel 2.3. Synthese von Komplexverbindung I.3

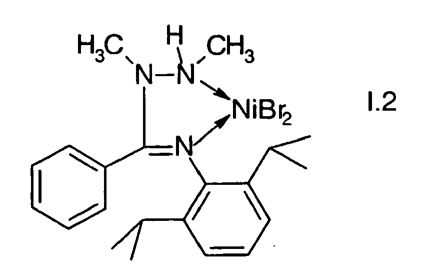

### Beispiel 2.1. wurde wiederholt, jedoch unter Verwendung von Ligand II.3

Ausbeute: 0,66 g (76 %), Summenformel: C₂₁H₂₉Br₂N₃Ni, Farbe: beige ¹H-NMR (CD₂Cl₂): 0,89 - 2,04 (12H, m, 2 x CH(CH₃)₂), 3,48 (2H, s, breit, 2 x CH(CH₃)₂), 6,00 (6H, s, breit, N(CH₃)₂), 7,11 - 8,96 (8H, m, Phenyl). Die Signale sind breit und tieffeldverschoben.
Der Komplex ist leicht paramagnetisch.
¹³C-NMR (CD₂Cl₂) : 13,1, 21,8, 22,2, 24,7, 29,8, 30,7 (CH(CH₃)₂, CH(CH₃)₂), 50,8 (N-CH₃), 124,0, 126,0, 127,7, 129,7, 131,2, 131,7, 135,5 (C-Phenyl), 140,0 (C=N-C, quartäres C, Phenyl), 143.8 (C=N).

**Tabelle 2: Übersicht über erfindungsgemäße Komplexverbindungen der allgemeinen Formel I**

| Verbindung | R¹ | R² | R³ | R⁴ | Nu | X | M |
|---|---|---|---|---|---|---|---|
| I a.1 | 2,6-(*i*-C₃H₇)₂C₆H₃ | C₆H₅ | CH₃ | CH₃ | O | Br | Ni |
| I a.2 | 2,6-(CH₃)₂C₆H₃ | C₆H₅ | CH₃ | CH₃ | N-H | Br | Ni |
| I a.3 | 2-(C₆H₅)-C₆H₄ | C₆H₅ | CH₃ | H | N-CH₃ | Br | Ni |
| i-C₃H₇: iso-Propyl; p-CH₃-C₆H₄: para-Tolyl | | | | | | | |

### 3. Polymerisationsexperimente

### 3.1. Polymerisation im Autoklaven

In einen inertisierten 1-1-Stahlautoklaven wurde die angegebene Menge des zu untersuchenden Komplexes, 2 ml 30 Gew.-%ige MAO-Lösung in Toluol (kommerziell erhältlich von Fa. Witco) und 400 ml Toluol gegeben. Bei 70°C wurde Ethylen bis zu einem Druck von 40 bar aufgepresst. Dieser Druck wird durch Nachdosieren von Ethylen über die Versuchsdauer von 90 min konstant gehalten. Die Reaktion wurde durch Entspannen abgebrochen und das Polymer durch Filtration, anschließendes Waschen mit Methanol und Trocken im Vakuum isoliert.

**Tabelle 3 Polymerisationsergebnisse**

| | *Ethylenpolymerisation (40 bar)* | | | | |
|---|---|---|---|---|---|
| Komplexverbindung | Aktivität | Ausbeute | η | Zeit | Einwaage Komplexverbindung |
| | [gmmol⁻¹h⁻¹bar⁻¹] | [g] | [dl/g] | [min] | [mg] |
| I.1 | 302,8 | 7,25 | 3,62 | 5 | 3,9 |
| I.2 | 3,3 | 1,0 | 2,15 | 90 | 2,7 |
| I.3 | 8,4 | 1,3 | 2,57 | 90 | 1,4 |

### 3.3 Ethylen-Hexen-Copolymerisation

Es wurde wie unter 3.1 verfahren, aber zu Beginn wurden zusammen mit den anderen Reagenzien 12,5 ml 1-Hexen in den Autoklaven gegeben.

**Tabelle 4: Copolymerisationsergebnisse**

| | | *Copolymerisation (Ethen*/*Hexen, 40 bar)* | | | | |
|---|---|---|---|---|---|---|
| Komplexverbindung | Zugabe 1-Hexen | Aktivität | Ausbeute | η | Zeit | Einwaage Komplexverbindung |
| | [ml] | [gmmol⁻¹h⁻¹bar⁻¹] | [g] | [dl/g] | [min] | [mg] |
| I.1 | 12,5 | 1,8 | 0,7 | - | 90 | 3,6 |

## Patentansprüche

1. Komplexverbindungen der allgemeinen Formel I, 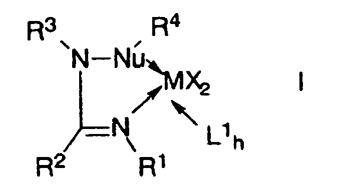 bei denen die variablen wie folgt definiert sind:
Nu ausgewählt aus O, S, N-R⁴*, P-R⁴*,
M ausgewählt aus Ni, Pd;
h ist eine ganze Zahl von 0 bis 4;
X gleich oder verschieden und ausgewählt aus Halogen, C₁-C₈-Alkyl, C₃-C₁₂-Cycloalkyl, C₇-C₁₃-Aralkyl oder C₆-C₁₄-Aryl,
R¹, R⁴, R⁴* gleich oder verschieden und ausgewählt aus Wasserstoff,
C₁-C₁₈-Alkyl, substituiert oder unsubstituiert, einfach gebundenem C₂-C₁₈-Alkenyl, substituiert oder unsubstituiert, mit ein bis 4 isolierten oder konjugierten Doppelbindungen;
C₃-C₁₂-Cycloalkyl, substituiert oder unsubstituiert, C₇-C₁₃-Aralkyl,
C₆-C₁₄-Aryl, unsubstituiert oder einfach oder mehrfach gleich oder verschieden substituiert mit
C₁-C₁₈-Alkyl, substituiert oder unsubstituiert,
C₂-C₁₈-Alkenyl, substituiert oder unsubstituiert,
C₃-C₁₂-Cycloalkyl,
C₇-C₁₃-Aralkyl,
C₆-C₁₄-Aryl,
Halogen,
C₁-C₆-Alkoxy, substituiert oder unsubstituiert,
C₆-C₁₄-Aryloxy,
SiR⁵R⁶R⁷ oder O-SiR⁵R⁶R⁷;
einfach gebundenen fünf- bis sechsgliedrigen stickstoffhaltigen Heteroarylresten, unsubstituiert oder einfach oder mehrfach gleich oder verschieden substituiert mit
C₁-C₁₈-Alkyl, substituiert oder unsubstituiert,
C₂-C₁₈-Alkenyl, substituiert oder unsubstituiert,
C₃-C₁₂-Cycloalkyl,
C₇-C₁₃-Aralkyl,
C₆-C₁₄-Aryl,
Halogen,
C₁-C₆-Alkoxy,
C₆-C₁₄-Aryloxy,
Si R⁵R⁶R⁷ oder O-SiR⁵R⁶R⁷;
R² C₆-C₁₄-Aryl, unsubstituiert oder einfach oder mehrfach gleich oder verschieden substituiert, oder fünf- bis sechsgliedrigen stickstoffhaltigen Heteroarylresten, unsubstituiert oder einfach oder mehrfach gleich oder verschieden substituiert, wobei die Substituenten wie oben stehend definiert sind;
R³, R⁸ C₁-C₁₈-Alkyl, C₂-C₁₈-Alkenyl, substituiert oder unsubstituiert, mit ein bis 4 isolierten oder konjugierten Doppelbindungen, C₃-C₁₂-Cycloalkyl, substituiert oder unsubstituiert, C₇-C₁₃-Aralkyl, C₆-C₁₄-Aryl, unsubstituiert oder einfach oder mehrfach gleich oder verschieden substituiert, oder fünf- bis sechsgliedrigen stickstoffhaltigen Heteroarylresten, unsubstituiert oder einfach oder mehrfach gleich oder verschieden substituiert, wobei die Substituenten wie oben stehend definiert sind;
wobei räumlich benachbarte Reste R¹ bis R⁴ miteinander zu einem 5- bis 12-gliedrigen Ring verbunden sein können, der seinerseits Substituenten tragen kann, die ausgewählt sind aus C₁-C₈-Alkyl, substituiert oder unsubstituiert, C₂-C₈-Alkenyl, substituiert oder unsubstituiert, mit ein bis 4 isolierten oder konjugierten Doppelbindungen, C₃-C₁₂-Cycloalkyl, substituiert oder unsubstituiert, C₇-C₁₃-Aralkyl oder C₆-C₁₄-Aryl;
L¹ ein organischer oder anorganischer Neutralligand,
R⁵ bis R⁷ gleich oder verschieden und ausgewählt werden aus Wasserstoff, C₁-C₈-Alkyl, C₃-C₁₂-Cycloalkyl, C₇-C₁₃-Aralkyl oder C₆-C₁₄-Aryl.

2. Komplexverbindungen gemäß Anspruch 1, **dadurch gekennzeichnet, dass** Nu Sauerstoff ist, H gleich Ni und X Halogen ist und
L¹ ausgewählt wird aus Phosphanen (R⁸)ₓPH₃₋ₓ,
Aminen (R⁸)ₓNH₃₋ₓ,
Ethern (R⁸)₂O,
H₂O,
Alkoholen (R⁸)OH,
Pyridin,
pyridinderivaten der Formel C₅H₅₋ₓ(R⁸)ₓN,
C₁-C₁₂-Alkylnitrilen,
C₆-C₁₄-Arylnitrilen oder ethylenisch ungesättigten Doppelbindungssystemen,
wobei x eine ganze Zahl von 0 bis 3 bedeutet und
R⁸ gleich oder verschieden und gewählt aus C₁-C₁₈-Alkyl, C₂-C₁₈-Alkenyl, substituiert oder unsubstituiert, mit ein bis 4 isolierten oder konjugierten Doppelbindungen, C₃-C₁₂-Cycloalkyl, substituiert oder unsubstituiert, C₇-C₁₃-Aralkyl, C₆-C₁₄-Aryl, unsubstituiert oder einfach oder mehrfach gleich oder verschieden substituiert, oder fünf- bis sechsgliedrigen stickstoffhaltigen Heteroarylresten, unsubstituiert oder einfach oder mehrfach gleich oder verschieden substituiert, bedeutet.

3. Komplexverbindungen nach Anspruch 1 oder 2, **dadurch gekennzeichnet, dass** h gleich 0 ist.

4. Verfahren zur Polymerisation oder Copolymerisation von Olefinen unter Verwendung von Komplexverbindungen der allgemeinen Formel I nach Anspruch 1 bis 3.

5. Verfahren zur Copolymerisation von Olefinen unter Verwendung von Komplexverbindungen der allgemeinen Formel I nach Anspruch 1 bis 3 mit 0,1 bis 20 mol-% vinylaromatischen Verbindungen wie beispielsweise Styrol oder mit 0,1 bis 50 mol-% Kohlenmonoxid.

6. Verfahren zur Herstellung von Polyolefinwachsen unter Verwendung von Komplexverbindungen der allgemeinen Formel I nach Anspruch 1 bis 3 und einem Regler, insbesondere Wasserstoff.

7. Verfahren zur Herstellung von Komplexverbindungen gemäß Anspruch 1 bis 3, **dadurch gekennzeichnet, dass** man einen Liganden der allgemeinen Formel II 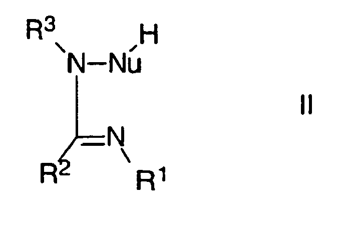 mit einer Metallverbindung MX_{y} umsetzt, wobei M ausgewählt ist aus Ni oder Pd und X Halogen, C₁-C₈-Alkyl, C₃-C₁₂-Cycloalkyl, C₇-C₁₃-Aralkyl oder C₆-C₁₄-Aryl bedeutet und wobei MX_{y} optional durch anorganische oder organische Neutralliganden stabilisiert werden kann.

8. Verfahren zur Herstellung eines Trägerkatalysators für die Polymerisation oder Copolymerisation von Olefinen, **dadurch gekennzeichnet, dass** man eine oder mehrere Komplexverbindungen nach Anspruch 1 bis 3 und optional einen Aktivator auf einem festen Träger abscheidet.

9. Trägerkatalysator für die Polymerisation oder Copolymerisation von Olefinen, erhältlich nach einem Verfahren gemäß Anspruch 7.

10. Verfahren zur Polymerisation oder Copolymerisation von Olefinen unter Verwendung eines Trägerkatalysators gemäß Anspruch 8.

## Claims

1. A complex of the formula I, 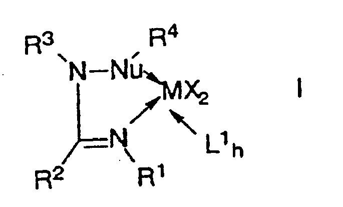 where the variables are defined as follows:
Nu is selected from among O, S, N-R⁴*, P-R⁴*,
M is selected from among Ni, Pd;
h is an integer from 0 to 4;
X are identical or different and are selected from among halogen, C₁-C₈-alkyl, C₃-C₁₂₋cycloalkyl, C₇-C₁₃-aralkyl and C₆-C₁₄-aryl,
R¹, R⁴, R⁴* are identical or different and are selected from among
hydrogen,
C₁-C₁₈-alkyl, substituted or unsubstituted,
C₂-C₁₈-alkenyl, substituted or unsubstituted, which has from one to 4 isolated or conjugated double bonds and is bound via a single bond;
C₃-C₁₂-cycloalkyl, substituted or unsubstituted, C₇-C₁₃-aralkyl,
C₆-C₁₄-aryl, unsubstituted or substituted by one or more identical or different substituents selected from among
C₁-C₁₈-alkyl, substituted or unsubstituted,
C₂-C₁₈-alkenyl, substituted or unsubstituted,
C₃-C₁₂-cycloalkyl,
C₇-C₁₃-aralkyl,
C₆-C₁₄-aryl,
halogen,
C₁-C₆-alkoxy, substituted or unsubstituted,
C₆-C₁₄-aryloxy,
SiR⁵R⁶R⁷ and O-SiR⁵R⁶R⁷;
five- to six-membered nitrogen-containing heteroaryl radicals which may be unsubstituted or substituted by one or more identical or different substituents selected from among
C₁-C₁₈-alkyl, substituted or unsubstituted,
C₂-C₁₈-alkenyl, substituted or unsubstituted,
C₃-C₁₂-cycloalkyl,
C₇-C₁₃-aralkyl,
C₆-C₁₄-aryl,
halogen,
C₁-C₆-alkoxy,
C₆-C₁₄-aryloxy,
SiR⁵R⁶R⁷ and O-SiR⁵R⁶R⁷,
and are bound via a single bond;
R² is C₆-C₁₄-aryl, unsubstituted or substituted by one or more identical or different substituents, or a five- to six-membered nitrogen-containing heteroaryl radical, unsubstituted or substituted by one or more identical or different substituents, where the substituents are as defined above;
R³, R⁸ are each C₁-C₁₈-alkyl, C₂-C₁₈-alkenyl, substituted or unsubstituted and having from one to 4 isolated or conjugated double bonds, C₃-C₁₂-cycloalkyl, substituted or unsubstituted, C₇-C₁₃-aralkyl, C₆-C₁₄-aryl, unsubstituted or substituted by one or more identical or different substituents, or a five- to six-membered nitrogen-containing heteroaryl radical, unsubstituted or substituted by one or more identical or different substituents, where the substituents are as defined above;
where adjacent radicals R¹ to R⁴ may be joined to one another to form a 5- to 12-membered ring which may in turn bear substituents selected from among C₁-C₈-alkyl, substituted or unsubstituted, C₂-C₈-alkenyl, substituted or unsubstituted and having from one to 4 isolated or conjugated double bonds, C₃-C₁₂-cycloalkyl, substituted or unsubstituted, C₇-C₁₃-aralkyl and C₆-C₁₄-aryl;
L¹ is an uncharged, organic or inorganic ligand,
R⁵ to R⁷ are identical or different and are selected from among hydrogen, C₁-C₈-alkyl, C₃₋C₁₂-cycloalkyl, C₇-C₁₃-aralkyl and C₆-C₁₄-aryl.

2. The complex according to claim 1, wherein Nu is oxygen, M is Ni and X is halogen and
L¹ is selected from among phosphines (R⁸)ₓPH₃₋ₓ,
amines (R⁸)ₓNH₃₋ₓ,
ethers (R⁸)₂O,
H₂O,
alcohols (R⁸)OH,
pyridine,
pyridine derivatives of the formula C₅H₅₋ₓ(R⁸)ₓN,
C₁-C₁₂-alkylnitriles,
C₆-C₁₄-arylnitriles and ethylenically unsaturated double bond systems,
where x is an integer from 0 to 3 and
R⁸ are identical or different and are selected from among C₁-C₁₈-alkyl, C₂-C₁₈-alkenyl, substituted or unsubstituted and having from one to 4 isolated or conjugated double bonds, C₃-C₁₂-cycloalkyl, substituted or unsubstituted, C₇-C₁₃-aralkyl, C₆-C₁₄-aryl, unsubstituted or substituted by one or more identical or different substituents, and five- to six-membered nitrogen-containing heteroaryl radicals, unsubstituted or substituted by one or more identical or different substituents.

3. A complex according to claim 1 or 2, wherein h is 0.

4. A process for the polymerization or copolymerization of olefins using complexes of the formula I according to any of claims 1 to 3.

5. A process for the copolymerization of olefins with from 0.1 to 20 mol% of vinylaromatic compounds such as styrene or with from 0.1 to 50 mol% of carbon monoxide using complexes of the formula I according to any of claims 1 to 3.

6. A process for preparing polyolefin waxes using complexes of the formula I according to any of claims 1 to 3 and a regulator, in particular hydrogen.

7. A process for preparing complexes according to any of claims 1 to 3, which comprises reacting a ligand of the formula II 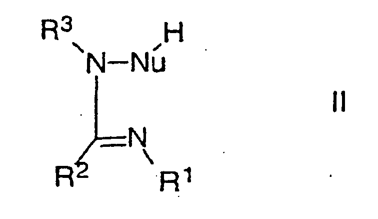 with a metal compound MX_{y}, where M is selected from among Ni and Pd and X is halogen, C₁-C₈-alkyl, C₃-C₁₂-cycloalkyl, C₇-C₁₃-aralkyl or C₆-C₁₄-aryl and MX_{y} may optionally be stabilized by uncharged, inorganic or organic ligands.

8. A process for preparing a supported catalyst for the polymerization or copolymerization of olefins, which comprises depositing one or more complexes according to any of claims 1 to 3 and optionally an activator on a solid support.

9. A supported catalyst for the polymerization or copolymerization of olefins which is obtainable by a process according to claim 7.

10. A process for the polymerization or copolymerization of olefins using a supported catalyst according to claim 8.

## Revendications

1. Composés complexes de la formule générale 1 : 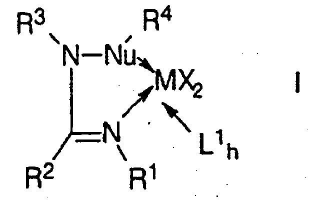 dans laquelle les variables sont définies de la manière suivante :
Nu est choisi parmi O, S, N-R⁴*, P-R⁴*,
M est choisi parmi Ni, Pd,
h est un nombre entier de 0 à 4,
X est identique ou différent et choisi parmi de l'halogène ou des groupes alkyle en C₁-C₈, cycloalkyle en C₃-C₁₂, aralkyle en C₇-C₁₃ ou aryle en C₆-C₁₄,
R¹, R⁴, R⁴* sont identiques ou différents et choisis parmi
de l'hydrogène,
un groupe alkyle en C₁-C₁₈, substitué ou non substitué,
un groupe alcényle en C₂-C₁₈ lié à une reprise, substitué ou non substitué, comportant une à 4 doubles liaisons isolées ou conjuguées,
un groupe cycloalkyle en C₃-C₁₂, substitué ou non substitué,
un groupe aralkyle en C₇-C₁₃,
un groupe aryle en C₆-C₁₄, non substitué ou substitué de manière identique ou différente à une ou à plusieurs reprises par
un groupe alkyle en C₁-C₁₈, substitué ou non substitué,
alcényle en C₂-C₁₈, substitué ou non substitué,
cycloalkyle en C₃-C₁₂,
aralkyle en C₇-C₁₃,
aryle en C₆-C₁₄,
de l'halogène,
un groupe alcoxy en C₁-C₆, substitué ou non substitué,
aryloxy en C₆-C₁₄,
SiR⁵R⁶R⁷ ou O-SiR⁵R⁶R⁷,
des radicaux hétéroaryle contenant de l'azote, à cinq ou six termes, liés à une reprise, non substitués ou substitués de manière identique ou différente à une ou à plusieurs reprises par
un groupe alkyle en C₁-C₁₈, substitué ou non substitué,
alcényle en C₂-C₁₈, substitué ou non substitué,
cycloalkyle en C₃-C₁₂,
aralkyle en C₇-C₁₃,
aryle en C₆-C₁₄,
de l'halogène,
un groupe alcoxy en C₁-C₆,
aryloxy en C₆-C₁₄,
SiR⁵R⁶R⁷ ou O-SiR⁵R⁶R⁷,
R² représente un groupe aryle en C₆-C₁₄, non substitué ou substitué de manière identique ou différente à une ou à plusieurs reprises, ou des radicaux hétéroaryle contenant de l'azote à cinq à six termes, non substitués ou substitués de manière identique ou différente à une ou à plusieurs reprises, les substituants étant tels que définis précédemment,
R³, R⁸ représentent un groupe alkyle en C₁-C₁₈, alcényle en C₂-C₁₈, substitué ou non substitué, comportant une à 4 doubles liaisons isolées ou conjuguées, cycloalkyle en C₃-C₁₂, substitué ou non substitué, aralkyle en C₇-C₁₃, aryle en C₆-C₁₄, non substitué ou substitué de manière identique ou différente à une ou à plusieurs reprises, ou des radicaux hétéroaryle contenant de l'azote à cinq à six termes, non substitués ou substitués de manière identique ou différente à une ou à plusieurs reprises, les substituants étant tels que définis précédemment,
les radicaux R¹ à R⁴ spatialement voisins pouvant être liés l'un à l'autre en un noyau à 5 jusqu'à 12 termes, qui peut porter à son tour des substituants qui sont choisis parmi des groupes alkyle en C₁-C₈, substitués ou non substitués, alcényle en C₂-C₈, substitués ou non substitués, comportant une jusqu'à 4 doubles liaisons isolées ou conjuguées, cycloalkyle en C₃-C₁₂, substitués ou non substitués, aralkyle en C₇-C₁₃ ou aryle en C₆-C₁₄,
L¹ représente un ligand neutre organique ou inorganique,
R⁵ à R⁷ sont identiques ou différents et choisis parmi de l'hydrogène ou des groupes alkyle en C₁-C₈, cycloalkyle en C₃-C₁₂, aralkyle en C₇-C₁₃ ou aryle en C₆-C₁₄.

2. Composés complexes suivant la revendication 1, **caractérisés en ce que** Nu est de l'oxygène, M est identique à Ni et X est de l'halogène, et
L¹ est choisi parmi
des phosphanes (R⁸)ₓPH₃₋ₓ,
des amines (R⁸)ₓNH₃₋ₓ,
des éthers (R⁸)₂O,
H₂O,
des alcools (R⁸)OH,
de la pyridine,
des dérivés de pyridine de la formule
C₅H₅₋ₓ(R⁸)ₓN,
des alkylnitriles en C₁-C₁₂,
des arylnitriles en C₆-C₁₄, ou
des systèmes à double liaison éthyléniquement non saturés,
x représentant un nombre entier de 0 à 3, et
R⁸ étant identique ou différent et choisi parmi des groupes alkyle en C₁-C₁₈, alcényle en C₂-C₁₈, substitués ou non substitués, comportant une à 4 doubles liaisons isolées ou conjuguées, cycloalkyle en C₃-C₁₂, substitués ou non substitués, aralkyle en C₇-C₁₃, aryle en C₆-C₁₄, non substitués ou substitués de manière identique ou différente à une ou à plusieurs reprises, ou des radicaux hétéroaryle contenant de l'azote à cinq à six termes, non substitués ou substitués de manière identique ou différente à une ou à plusieurs reprises.

3. Composés complexes suivant la revendication 1 ou 2, **caractérisés en ce que** h est égal à 0.

4. Procédé de polymérisation ou de copolymérisation d'oléfines, par utilisation de composés complexes de la formule générale I suivant les revendications 1 à 3.

5. Procédé de copolymérisation d'oléfines, par utilisation de composés complexes de la formule générale I suivant les revendications 1 à 3, avec 0,1 à 20 % en mole de composés vinyl-aromatiques tels que par exemple du styrène, ou avec 0,1 à 50 % en mole de monoxyde de carbone.

6. Procédé de préparation de cires polyoléfiniques par utilisation de composés complexes de la formule générale I suivant les revendications 1 à 3 et d'un régulateur, en particulier de l'hydrogène.

7. Procédé de préparation de composés complexes suivant les revendications 1 à 3, **caractérisé en ce qu'**on fait réagir un ligand de la formule générale II : 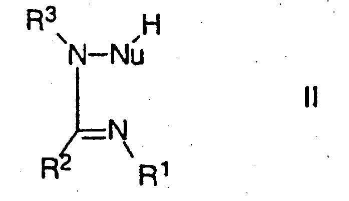 avec un composé métallique MX_{y}, M étant choisi parmi Ni ou Pd et X représentant de l'halogène ou un groupe alkyle en C₁-C₈, cycloalkyle en C₃-C₁₂, aralkyle en C₇-C₁₃ ou aryle en C₆-C₁₄, MX_{y} pouvant être éventuellement stabilisé par des ligands neutres inorganiques ou organiques.

8. Procédé de préparation d'un catalyseur sur support pour la polymérisation ou copolymérisation d'oléfines, **caractérisé en ce qu'**on dépose un ou plusieurs composés complexes suivant les revendications 1 à 3 et éventuellement un activeur sur un support solide.

9. Catalyseur sur support pour la polymérisation ou copolymérisation d'oléfines, que l'on peut obtenir suivant un procédé selon la revendication 7.

10. Procédé de polymérisation ou de copolymérisation d'oléfines par utilisation d'un catalyseur sur support selon la revendication 8.
